(19) **Europäisches Patentamt**
**European Patent Office**
**Office européen des brevets**

(11) **EP 4 579 783 A1**

(12) **EUROPEAN PATENT APPLICATION**
published in accordance with Art. 153(4) EPC

(43) Date of publication:
**02.07.2025 Bulletin 2025/27**

(21) Application number: **23884550.7**

(22) Date of filing: **09.10.2023**

(51) International Patent Classification (IPC):
*H01M 4/131* (2010.01)     *H01M 4/505* (2010.01)
*H01M 4/525* (2010.01)     *H01M 4/62* (2006.01)
*H01M 10/0525* (2010.01)

(52) Cooperative Patent Classification (CPC):
Y02E 60/10

(86) International application number:
**PCT/CN2023/123525**

(87) International publication number:
**WO 2024/093618 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2022 CN 202211353337**

(71) Applicant: **Ningde Amperex Technology Limited Ningde, Fujian 352100 (CN)**

(72) Inventor: **CAI, Xiaohu Ningde, Fujian 352100 (CN)**

(74) Representative: **Icosa 83 avenue Denfert-Rochereau 75014 Paris (FR)**

(54) **ELECTROCHEMICAL DEVICE AND ELECTRONIC DEVICE**

(57) This application provides an electrochemical apparatus and an electronic apparatus, the electrochemical apparatus including a positive electrode plate, where the positive electrode plate includes a positive electrode current collector and a positive electrode active material layer disposed on one or two sides of the positive electrode current collector, and the positive electrode active material layer includes a positive electrode active material. A ratio of $D_v99$ of the positive electrode active material to thickness $H_1$ of the positive electrode active material layer on a single side satisfies $0.5 \leq D_v99/H_1 \leq 0.9$. Agglomeration regions with a bright spot having a diameter $D_0$ greater than or equal to 20 $\mu m$ are observed on surface of the positive electrode active material layer under a scanning electron microscope, and the agglomeration regions have a number density less than or equal to 5 pcs/cm$^2$ per unit area on the surface of the positive electrode active material layer. The electrochemical apparatus has good high-temperature cycling performance.

FIG. 3

# EP 4 579 783 A1

**Description**

## CROSS-REFERENCE TO RELATED APPLICATIONS

This application claims priority to Chinese Patent Application No.202211353337.1, filed on Nov. 01, 2022 and entitled "ELECTROCHEMICAL APPARATUS AND ELECTRONIC APPARATUS", which is incorporated herein by reference in its entirety.

## TECHNICAL FIELD

This application relates to the field of electrochemical apparatus technologies, and specifically, to an electrochemical apparatus and an electronic apparatus.

## BACKGROUND

Consumer electronics, electric vehicles, and other devices have become an indispensable part of people's lives, and these devices require electrochemical apparatuses to provide electrical energy for them, thereby driving the rapid development of electrochemical apparatuses represented by lithium-ion secondary batteries.

However, in the related technology, the electrochemical apparatus has poor high-temperature cycling performance, which limits its application in some devices.

## SUMMARY

This application provides an electrochemical apparatus and an electronic apparatus, the electrochemical apparatus having good high-temperature cycling performance.

According to a first aspect, some embodiments of this application provide an electrochemical apparatus including a positive electrode plate, where the positive electrode plate includes a positive electrode current collector and a positive electrode active material layer disposed on one or two sides of the positive electrode current collector, and the positive electrode active material layer includes a positive electrode active material. A ratio of $D_v99$ of the positive electrode active material to thickness $H_1$ of the positive electrode active material layer on a single side satisfies $0.5 \leq D_v99/H_1 \leq 0.9$. Agglomeration regions with a bright spot having a diameter $D_0$ greater than or equal to 20 $\mu$m are observed on surface of the positive electrode active material layer under a scanning electron microscope, and the agglomeration regions have a number density less than or equal to 5 pcs/cm$^2$ per unit area on the surface of the positive electrode active material layer.

In the electrochemical apparatus provided in the embodiment of this application, a ratio of $D_v99$ of the positive electrode active material to thickness $H_1$ of the positive electrode active material layer on a single side satisfies $0.5 \leq D_v99/H_1 \leq 0.9$. This allows for the thinning of the positive electrode plate, reducing the ion transport path, thereby reducing ion polarization and the resistance of the electrochemical apparatus. In addition, agglomeration regions with a bright spot having a diameter $D_0$ greater than or equal to 20 $\mu$m on surface of the positive electrode active material layer observed under a scanning electron microscope have a number density less than or equal to 5 pcs/cm$^2$ per unit area on the surface of the positive electrode active material layer, such that an amount of the positive electrode active material layer crushed during a rolling process is reduced, thereby improving high-temperature cycling performance of the electrochemical apparatus.

According to any one of the preceding embodiments of the first aspect of this application, $D_v99$ of the positive electrode active material satisfies $15 \ \mu m \leq D_v99 \leq 30 \ \mu m$, and thickness H1 of the positive electrode active material layer on one single side satisfies $10 \ \mu m \leq H_1 \leq 35 \ \mu m$.

According to any one of the preceding embodiments of the first aspect of this application, a ratio of $D_v50$ of the positive electrode active material and $D_v10$ of the positive electrode active material satisfies $1.0 \leq D_v50/D_v10 \leq 2.5$.

According to any one of the preceding embodiments of the first aspect of this application, a ratio of $D_v50$ of the positive electrode active material and $D_v10$ of the positive electrode active material satisfies $1.0 \leq D_v50/D_v10 \leq 2.0$.

According to any one of the preceding embodiments of the first aspect of this application, the positive electrode active material includes a nickel-cobalt-manganese ternary material.

According to any one of the preceding embodiments of the first aspect of this application, a molar fraction of nickel in the nickel-cobalt-manganese ternary material is greater than or equal to 60%.

According to any one of the preceding embodiments of the first aspect of this application, thickness $H_2$ of the positive electrode current collector satisfies at least one of the following characteristics:

$$(I)\ 0.3 \leq H_2/D_v99 \leq 1;$$

$$(II)\ 1 \leq H_1/H_2 \leq 4;$$

or

$$(III)\ 7\ \mu m \leq H_2 \leq 20\ \mu m.$$

According to any one of the preceding embodiments of the first aspect of this application, thickness H2 of the positive electrode current collector satisfies $8\ \mu m \leq H_2 \leq 12\ \mu m$.

According to any of the preceding embodiments of the first aspect of this application, the surface density of the positive electrode active material layer is $80\ mg/1540.25\ mm^2$ to $180\ mg/1540.25\ mm^2$.

According to any one of the preceding embodiments of the first aspect of this application, the positive electrode active material layer has a compacted density of $3.3\ g/cm^3$ to $3.7\ g/cm^3$.

According to any one of the preceding embodiments of the first aspect of this application, the positive electrode active material layer has a compacted density of $3.5\ g/cm^3$ to $3.65\ g/cm^3$.

According to any one of the preceding embodiments of the first aspect of this application, the positive electrode active material layer further includes a binder, the binder has a corresponding Fourier transform infrared spectral characteristic peak in the range of $1655\ cm^{-1}$ to $1705\ cm^{-1}$.

According to any one of the preceding embodiments of the first aspect of this application, the binder includes a polyvinylidene fluoride copolymer.

According to any one of the preceding embodiments of the first aspect of this application, the binder has a structural formula represented by formula (A):

$$(VDF)m(TFE)n(HFP)r(PVP)x \qquad (A)$$

In formula (A), VDF is a structural unit of polyvinylidene fluoride, TFE is a structural unit of polytetrafluoroethylene, HFP is a structural unit of polyhexafluoropropylene, PVP is a structural unit of polyvinylpyrrolidone, $0.35 \leq m \leq 1$, $0 \leq n \leq 0.4$, $0 \leq r \leq 0.2$, $0 \leq x \leq 0.2$, and $m + n + r + x = 1$.

According to a second aspect, some embodiments of this application provide an electronic apparatus including the electrochemical apparatus described in any one of the preceding embodiments of the first aspect of this application.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

**BRIEF DESCRIPTION OF DRAWINGS**

A person of ordinary skill in the art can clearly understand various other advantages and benefits by reading the detailed description of the embodiments below. The accompanying drawings are merely intended to illustrate some embodiments and are not intended to limit this application. In addition, in all the accompanying drawings, same parts are denoted by same reference signs. In the accompanying drawings:

FIG. 1 is a schematic structural diagram of an electrochemical apparatus according to an embodiment of this application.
FIG. 2 is a schematic diagram of an exploded structure of the electrochemical apparatus shown in FIG. 1.
FIG. 3 is an SEM image of a positive electrode plate in the electrochemical apparatus according to Example 1 of this application.
FIG. 4 is an SEM image of a positive electrode plate in the electrochemical apparatus according to Comparative example 1 of this application.

Description of reference signs
5. electrochemical apparatus, 51. housing, 52. electrode assembly, and 53. top cover assembly.

**DESCRIPTION OF EMBODIMENTS**

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of some embodiments of this specification, it should be noted that, unless otherwise stated, "more than" and "less than" are inclusive of the present number, and "more" in "more than one piece" or "more than one type" means more than two.

The grouping of alternative elements or embodiments disclosed herein should not be construed as a limitation. Each member of the group may be adopted and claimed separately, or be adopted and claimed in any combination with other members of the group or other elements found herein. It is foreseeable that, one or more members of a group may be included in or excluded from the group for reasons of convenience and/or patentability. When any such inclusion or exclusion occurs, the specification is hereby considered to contain a modified group, thereby satisfying the written description for all Markush groups used in the claims.

Various modifications and changes can be made within the scope of this application without departing from the protection of this application, which would be apparent to persons skilled in the art. Therefore, this application is intended to cover modifications and changes to this application that fall within the corresponding claims (scope of protection claimed) and their equivalents. It should be noted that the embodiments provided in this application may be combined unless a contradiction occurs.

Before explaining the scope of protection provided in the embodiments of this application, this application first specifies the problems in the related art for a better understanding of the embodiments of this application.

Electrochemical apparatuses, represented by lithium-ion secondary batteries, are widely used in consumer electronics, electric vehicles, and other devices due to their high energy density, good cycling performance, and rechargeability. With the rapid development of secondary battery technology, the development of fast charging and discharging technology has been promoted, making lithium-ion secondary batteries that support fast charging and discharging one of the most popular electrochemical apparatuses in the market.

In related art, lithium-ion secondary batteries generate a large amount of heat during high-rate charging and discharging, causing the temperature of the lithium-ion secondary batteries to rise, making them prone to polarization. To reduce the polarization of lithium-ion secondary batteries, the thickness of the electrode plate can be reduced to shorten the ion transport path. However, the reduction of the thickness of the electrode plate causes the agglomerated slurry applied on the surface to form bumps, and the active material within the bumps is prone to crushing during the rolling process. This causes the temperature of the lithium-ion secondary battery to rise during the high-rate charging and discharging, resulting in a decrease in the cycling performance of the lithium-ion secondary battery.

In view of this, some embodiments of this application provide an electrochemical apparatus and an electronic apparatus, the electrochemical apparatus having good high-temperature cycling performance.

The electrochemical apparatus according to this application includes any apparatus in which an electrochemical reaction takes place. Specific examples of the apparatus include all types of primary batteries, secondary batteries, fuel batteries, solar batteries, or capacitors. For example, the electrochemical apparatus is a lithium secondary battery, the lithium secondary battery including a lithium metal secondary battery, a lithium-ion secondary battery, a lithium polymer secondary battery, or a lithium-ion polymer secondary battery.

**Electrochemical apparatus**

Some embodiments of this application provide an electrochemical apparatus including a positive electrode plate, where the positive electrode plate includes a positive electrode current collector and a positive electrode active material layer disposed on one or two sides of the positive electrode current collector, and the positive electrode active material layer includes a positive electrode active material. A ratio of $D_v99$ of the positive electrode active material to thickness $H_1$ of the positive electrode active material layer on a single side satisfies $0.5 \leq D_v99/H_1 \leq 0.9$. Agglomeration regions with a bright spot having a diameter $D_0$ greater than or equal to 20 $\mu$m are observed on surface of the positive electrode active material layer under a scanning electron microscope, and the agglomeration regions have a number density less than or equal to 5 pcs/cm$^2$ per unit area on the surface of the positive electrode active material layer.

In this application, after the bumps on the surface of the electrode plate are rolled, agglomeration regions having a diameter $D_0$ greater than or equal to 20 $\mu$m are formed. The number of agglomeration regions within a unit area is reduced by decreasing the number of bumps on the surface of the electrode plate, thereby improving the uniformity of the electrode plate surface and reducing the decrease in cycling performance caused by the crushing of bumps during the rolling process. Fewer agglomeration regions mean fewer bumps on the surface of the electrode plate before rolling. Therefore, the agglomeration regions on the electrode plate after rolling should be as few as possible.

$D_v99$ is a particle size where the cumulative distribution by volume reaches 99% as counted from the small particle size side.

The diameter $D_0$ is the maximum measurable distance in the region without a clearly defined shape.

Agglomerated particles in the positive electrode slurry forming the positive electrode active material layer are applied to the surface of the positive electrode current collector and protrude from the surface of the positive electrode active material layer. After being rolled, these agglomerated particles form the agglomeration regions.

In the electrochemical apparatus provided in the embodiment of this application, a ratio of $D_v99$ of the positive electrode active material to thickness $H_1$ of the positive electrode active material layer on a single side satisfies $0.5 \leq D_v99/H_1 \leq 0.9$. This allows for the thinning of the positive electrode plate, reducing the ion transport path, thereby reducing ion polarization and the resistance of the electrochemical apparatus. In addition, agglomeration regions with a bright spot having a diameter $D_0$ greater than or equal to 20 $\mu$m on surface of the positive electrode active material layer observed under a scanning electron microscope have a number density less than or equal to 5 pcs/cm$^2$ per unit area on the surface of the positive electrode active material layer, such that an amount of the positive electrode active material layer crushed during a rolling process is reduced, thereby improving high-temperature cycling performance of the electrochemical apparatus.

In some embodiments of this application, an appropriate ratio of $D_v99$ of the positive electrode active material to the thickness $H_1$ of the positive electrode active material layer on a single side not only enables the positive electrode plate to be thinner and reduces defects occurring in the processing process but also reduces the occurrence of crushing of the positive electrode active material.

In some embodiments of this application, $D_v99$ of the positive electrode active material satisfies $15 \mu m \leq D_v99 \leq 30 \mu m$, and the thickness of the positive electrode active material layer on a single side $H_1$ satisfies $10 \mu m \leq H_1 \leq 35 \mu m$.

In these embodiments described above, an appropriate ratio of $D_v99$ of the positive electrode active material to the thickness $H_1$ of the positive electrode active material layer on a single side can reduce the occurrence of defects such as scratches in the processing of the positive electrode active material layer and can further reduce the amount of the positive electrode active material that is crushed in the rolling process, thereby helping improve the high-temperature cycling performance.

In some examples, the $D_v99$ of the positive electrode active material may be, but is not limited to, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, or 30 $\mu$m. The thickness $H_1$ of the positive electrode active material layer on a single side may be, but is not limited to, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, 30 $\mu$m, 31 $\mu$m, 32 $\mu$m, 33 $\mu$m, 34 $\mu$m, or 35 $\mu$m.

In addition, other volumetric particle size distributions of the positive electrode active material within an appropriate range can also reduce the occurrence of crushing of the positive electrode active material, thereby reducing the electrical resistance of the positive electrode plate and the expansion rate of the electrochemical apparatus.

In some embodiments of this application, a ratio of $D_v50$ of the positive electrode active material to $D_v10$ of the positive electrode active material satisfies $1.0 \leq D_v50/D_v10 \leq 2.5$.

$D_v50$ is a particle size where the cumulative distribution by volume reaches 50% as counted from the small particle size side.

$D_v10$ is a particle size where the cumulative distribution by volume reaches 10% as counted from the small particle size side.

In these embodiments, with the ratio of $D_v50$ to $D_v10$ of the positive electrode active material satisfying the relationship described above, the crushing of the positive electrode active material can be reduced, thereby decreasing the electrical resistance of the positive electrode plate and the expansion rate of the electrochemical apparatus to further improve the high-temperature cycling performance of the electrochemical apparatus.

In some embodiments of this application, a ratio of $D_v50$ of the positive electrode active material to $D_v10$ of the positive electrode active material satisfies $1.0 \leq D_v50/D_v10 \leq 2.0$.

In these embodiments described above, with the ratio of $D_v50$ of the positive electrode active material to $D_v10$ satisfying the relationship described above, the crushing of the positive electrode active material can be further reduced to improve the high-temperature cycling performance of the electrochemical apparatus.

In some examples, a ratio of the diameter $D_v50$ of the positive electrode active material to $D_v10$ of the positive electrode active material may be, but is not limited to, 1.0, 1.1, 1.2, 1.3, 1.4, 1.5, 1.6, 1.7, 1.8, 1.9, 2.0, 2.1, 2.2, 2.3, 2.4, or 2.5.

In some embodiments of this application, the thickness of the positive electrode current collector also affects the compacted density and processing of the positive electrode active material layer. In some embodiments of this application, thickness $H_2$ of the positive electrode current collector satisfies at least one of the following characteristics:

$$\text{(I) } 0.3 \leq H_2/D_v99 \leq 1;$$

$$\text{(II) } 1 \leq H_1/H_2 \leq 4;$$

or

$$\text{(III) } 7 \ \mu m \leq H_2 \leq 20 \ \mu m.$$

In these embodiments described above, the thickness $H_2$ of the positive electrode current collector, $H_2/D_v99$, and $H_1/H_2$ being within an appropriate range can further improve the compacted density of the positive electrode active material layer, and also reduce the occurrence of breaking of the positive electrode plate during rolling and the occurrence of overpressure crushing of the positive electrode active material. This can lower the resistance of the positive electrode plate and the expansion rate of the electrochemical apparatus, thereby improving the high-temperature cycling performance of the electrochemical apparatus.

In some embodiments of this application, the thickness $H_2$ of the positive electrode current collector may be in the range of 8 $\mu m$-12 $\mu m$. The thickness $H_2$ of the positive electrode current collector being in this range may further increase the compacted density of the positive electrode active material and reduce the resistance of the positive electrode plate, thereby improving the high-temperature cycling performance of the electrochemical apparatus.

In some examples, a ratio of the thickness $H_2$ of the positive electrode current collector to $D_v99$ of the positive electrode active material may be, but is not limited to, 0.3, 0.4, 0.5, 0.6, 0.7, 0.8, 0.9, or 1. A ratio of the thickness $H_1$ of the positive electrode active material layer to the thickness $H_2$ of the positive electrode current collector may be, but is not limited to, 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4.0. The thickness $H_2$ of the positive electrode current collector may be, but is not limited to, 7 $\mu m$, 8 $\mu m$, 9 $\mu m$, 10 $\mu m$, 11 $\mu m$, 12 $\mu m$, 13 $\mu m$, 14 $\mu m$, 15 $\mu m$, 16 $\mu m$, 17 $\mu m$, 18 $\mu m$, 19 $\mu m$, or 20 $\mu m$.

The embodiments of this application do not specifically limit the material of the positive electrode current collector, and the positive electrode current collector may be a metal foil or a porous metal plate, for example, a metal foil or porous metal plate made of aluminum, copper, nickel, titanium, iron, or another metal, or an alloy thereof. In some embodiments of this application, the positive electrode current collector is an aluminum foil.

In some embodiments of this application, the positive electrode active material layer has a compacted density of 3.3 $g/cm^3$ to 3.7 $g/cm^3$.

In these embodiments described above, setting the compacted density of the positive electrode active material layer within the above range can help improve the high-temperature cycling performance of the electrochemical apparatus.

In other embodiments of this application, the compacted density of the positive electrode active material layer is 3.5 $g/cm^3$ to 3.65 $g/cm^3$.

In some examples, the compacted density of the positive electrode active material layer may be, but is not limited to, 3.3 $g/cm^3$, 3.31 $g/cm^3$, 3.32 $g/cm^3$, 3.33 $g/cm^3$, 3.34 $g/cm^3$, 3.35 $g/cm^3$, 3.36 $g/cm^3$, 3.37 $g/cm^3$, 3.38 $g/cm^3$, 3.39 $g/cm^3$, 3.40 $g/cm^3$, 3.41 $g/cm^3$, 3.42 $g/cm^3$, 3.43 $g/cm^3$, 3.44 $g/cm^3$, 3.45 $g/cm^3$, 3.46 $g/cm^3$, 3.47 $g/cm^3$, 3.48 $g/cm^3$, 3.49 $g/cm^3$, 3.50 $g/cm^3$, 3.51 $g/cm^3$, 3.52 $g/cm^3$, 3.53 $g/cm^3$, 3.54 $g/cm^3$, 3.55 $g/cm^3$, 3.56 $g/cm^3$, 3.57 $g/cm^3$, 3.58 $g/cm^3$, 3.59 $g/cm^3$, or 3.6 $g/cm^3$.

The positive electrode active material can directly affect the energy density and cycling performance of the electrochemical apparatus. Therefore, in some embodiments of this application, the positive electrode active material includes a nickel-cobalt-manganese ternary material. The nickel-cobalt-manganese ternary material can help improve the energy density and cycling performance of the electrochemical apparatus.

The nickel-cobalt-manganese ternary material can be a ternary structure material such as NCM811, NCM622, NCM613, NCM523, NCM111, and the like.

In NCM811, N represents nickel, C represents cobalt, M represents manganese, and 811 represents a ratio of moles of nickel, cobalt, and manganese in the ternary material, that is, the mole ratio of the nickel element:the cobalt element:the manganese element is 8:1:1, and in this case, the proportion of moles of nickel to total moles of nickel, cobalt, and manganese in the nickel-cobalt-manganese ternary material is 80%. In NCM523, the mole ratio of the nickel element:the cobalt element:the manganese element is 5:2:3, and the proportion of moles of nickel to the total moles of nickel-cobalt-manganese in the nickel-cobalt-manganese ternary material is 50%.

In some embodiments of this application, a proportion of moles of nickel to total moles of nickel, cobalt, and manganese in the nickel-cobalt-manganese ternary material is greater than or equal to 60%.

In some other embodiments of this application, the positive electrode active material may further include at least one of a lithium cobaltate material, a lithium manganate material, another metal oxide supporting lithium deintercalation or intercalation, or an olivine structure material such as lithium manganese iron phosphate, lithium iron phosphate, and lithium manganese phosphate.

The positive electrode active material layer is formed by coating the surface of the positive electrode current collector with a positive electrode slurry, and the surface density of the positive electrode active material layer has an impact on the energy density and cycling performance of the electrochemical apparatus.

In this application, the surface density refers to a mass of the positive electrode active material per unit area.

In some embodiments of this application, the surface density of the positive electrode active material layer is 80 mg/1540.25 mm$^2$ to 180 mg/1540.25 mm$^2$.

In these embodiments described above, setting the surface density of the positive electrode active material layer within the appropriate range described above may help components in the positive electrode active material layer to be uniformly dispersed on the surface of the positive electrode current collector, reducing the formation of gels, thereby improving the high-temperature cycling performance of the electrochemical apparatus.

In some examples, the surface density of the positive electrode active material layer may be, but is not limited to, 80 mg/1540.25 mm$^2$-90 mg/1540.25 mm$^2$, 91 mg/1540.25 mm$^2$-100 mg/1540.25 mm$^2$, 101 mg/1540.25 mm$^2$-110 mg/1540.25 mm$^2$, 111 mg/1540.25 mm$^2$-120mg/1540.25 mm$^2$, 121 mg/1540.25 mm$^2$-130mg/1540.25 mm$^2$, 131 mg/1540.25 mm$^2$-140 mg/1540.25 mm$^2$, 141 mg/1540.25 mm- 150 mg/1540.25 mm2- 150 mg/1540.25 mm$^2$, 151 mg/1540.25 mm$^2$-160 mg/1540.25 mm$^2$, 161 mg/1540.25 mm$^2$-170 mg/1540.25 mm$^2$, or 171 mg/1540.25 mm$^2$-180 mg/1540.25 mm$^2$.

In some embodiments of this application, the positive electrode active material layer further includes a binder, the binder has the following Fourier-transform infrared spectral characteristic peak in the range of 1655cm$^{-1}$ to 1705cm$^{-1}$.

In these embodiments, the binder can improve the stability of slurry viscosity and, particularly in the case of the positive electrode active material layer including a high-nickel positive electrode active material, can further reduce the formation of gels, thereby contributing to the formation of a uniform and thinned positive electrode active material layer.

In some embodiments of this application, the binder includes a polyvinylidene fluoride copolymer.

In some embodiments of this application, the binder has the structural formula represented by formula (A):

$$(VDF)m(TFE)n(HFP)r(PVP)x \qquad (A)$$

In formula (A), VDF is a structural unit of polyvinylidene fluoride, TFE is a structural unit of polytetrafluoroethylene, HFP is a structural unit of polyhexafluoropropylene, PVP is a structural unit of polyvinylpyrrolidone, $0.35 \leq m \leq 1$, $0 \leq n \leq 0.4$, $0 \leq r \leq 0.2$, $0 \leq x \leq 0.2$, and $m + n + r + x = 1$.

In these embodiments described above, the binder having the structural formula represented by formula (A) can contribute to the dispersion of the slurry components such as the conductive agent and the positive electrode active material, to inhibit the formation of gels. This further reduces the occurrence of abnormal agglomeration between the components, thereby reducing the number of bumps on the surface of the electrode plate as well as the number of agglomeration regions formed by rolling the bumps. Especially in the high-nickel positive electrode active material system, the formation of gels in the slurry is further inhibited, thereby further improving the high-temperature cycling performance of the electrochemical apparatus.

In an embodiment of this application, the binder having formula (A) can be produced by the following preparation method:

After the reactor with a volume of 25 L is vacuumed and nitrogen is pumped to replace oxygen, 18 kg of deionized water, 200 g of perfluorooctanoic acid sodium solution with a mass concentration of 5%, and 80g of paraffin wax (with a melting point of 60°C) are put into the reactor, then, the stirring speed is adjusted to 130 rpm/min, and the temperature of the reactor is increased to 85°C.

Vinylidene fluoride monomer, tetrafluoroethylene monomer, hexafluoropropylene monomer, and vinylpyrrolidone monomer are added proportionally to the reactor with a reactor pressure of 5.0 MPa, and then 1.15 g of initiator dioctyl peroxydicarbonate is added to carry out the polymerization reaction.

Then, vinylidene fluoride monomer is added to maintain the reactor pressure at 5.0 MPa, 0.01g of initiator is added every 10 min, and chain transfer agent HFC-4310 is added in four batches at conversion rates of 20%, 40%, 60%, and 80% respectively, with 5g added each time, where a total of 5 kg of vinylidene fluoride monomer is added to the reaction.

When the pressure in the reactor is decreased to 4.0 MPa after 140 minutes of the reaction time, gas is released to collect materials, followed by centrifugation, washing, and drying, to produce a binder having formula (A).

In some embodiments of this application, the binder satisfies at least one of the following characteristics:

(I) weight-average molecular weight Mw of the binder satisfies $900000 \leq Mw \leq 1200000$; or
(II) weight-average molecular weight Mw and number-average molecular weight Mn of the binder satisfy $1.8 \leq Mw/Mn \leq 2.4$.

In these embodiments above, the binder satisfying at least one of (I) or (II) can contribute to the dispersion of the slurry components such as the conductive agent and the positive electrode active material, to inhibit the formation of gels. This further reduces the occurrence of abnormal agglomeration between the components. Especially in the high-nickel positive electrode active material system, the formation of gels in the slurry is further inhibited, thereby further improving the high-temperature cycling performance of the electrochemical apparatus.

In some embodiments of this application, based on the weight of the positive electrode active material layer, weight percentage X of the binder satisfies $0.5\% \leq X \leq 3\%$.

In these embodiments, the weight percentage X of the binder being within the above appropriate range enables a high bonding strength between the positive electrode active material layer and the positive electrode current collector, so that the stability of the positive electrode active material layer is improved.

In some other embodiments of this application, the weight percentage X of the binder satisfies $0.7\% \leq X \leq 1.5\%$.

In some examples, the weight percentage X of the binder may be 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, or 3%.

In some embodiments of this application, the positive electrode active material layer further includes a conductive agent, and the conductive agent contributes to improving the electronic conductivity of the positive electrode plate. For example, the conductive agent is selected from at least one of a carbon-based material, a metal-based material, a conductive polymer, or a mixture thereof. For example, the carbon-based material is selected from carbon black, acetylene black, Ketjen black, carbon fiber, carbon nanotubes, or any combination thereof. The metal-based material is selected from metal powder, metal fiber, copper, nickel, aluminum, or silver. The conductive polymer is a polyphenylene derivative.

In some embodiments of this application, bonding strength F of the positive electrode active material layer satisfies $10N/m \leq F \leq 40N/m$.

In these embodiments above, the binder can help make the bonding strength F of the positive electrode active material layer satisfy the above relationship. This is beneficial for meeting the bonding requirements during the processing of the positive electrode plate, and can also delay the increase speed of expansion rate of the positive electrode plate during cycling, resulting in better high-temperature cycling performance of the electrochemical apparatus.

The bonding strength in these embodiments described above can be obtained by testing using a test method as follows:

(1) taking a dried positive electrode plate and cut it into a sample with a width of 30 mm and a length of 100 mm-160 mm using a blade;
(2) attaching a special double-sided tape to a steel plate, where the double-sided tape has a width of 20 mm and a length of 90 mm-150 mm;
(3) attaching the sample to the double-sided tape with the testing surface facing down to fit the double-sided tape;
(4) inserting a paper strip with the same width as the sample and a length greater than 80 mm below the sample, and fixing it with crepe adhesive to create the test sample;
(5) turning on the tensile testing machine (brand: SAA, model: Instron 3365), and after the indicator lights, adjusting the limit block to an appropriate position;
(6) fixing the test sample to the testing platform, folding the paper strip upward, fixing it with a fixture, and starting to pull the paper strip at a speed of 10 mm/min within a testing range from 0 mm to 40 mm at a 90° angle to separate the positive electrode active material layer adhered to the surface of the double-sided tape from the positive electrode current collector until the test is completed; and
(7) saving test data according to the software prompts to obtain data of bonding strength between the positive electrode active material layer and the positive electrode current collector, and after the test is completed, removing the sample and turning off the instrument.

The positive electrode plate of this application can be prepared according to conventional methods in the art. For example, the active material, the conductive material, and the binder are dispersed in N-methyl pyrrolidone (NMP) to produce a homogeneous positive electrode slurry, the positive electrode slurry is applied on the positive electrode current collector, followed by drying, cold pressing, sheet cutting, slitting, and re-drying, to produce the positive electrode plate.

In some embodiments of this application, the electrochemical apparatus further includes a negative electrode plate, a separator, and an electrolyte.

The negative electrode plate includes a negative electrode current collector and a negative electrode active material layer disposed on at least one surface of the negative electrode current collector. It should be understood that the negative electrode plate may be provided with the negative electrode active material layer on one surface of the negative electrode current collector or may be provided with a negative electrode active material layer on two surfaces of the negative electrode current collector. This is not limited in the embodiments of this application.

The negative electrode current collector may be a metal foil or a porous metal plate, for example, a metal foil or porous metal plate made of copper, nickel, titanium, iron, or another metal, or an alloy thereof. In some embodiments of this application, the negative electrode current collector is a copper foil.

This application does not limit the type of the negative electrode active material in the negative electrode active material layer, which can be selected according to requirements. For example, another negative electrode active material includes, but is not limited to, at least one of natural graphite, artificial graphite, a mesocarbon microbead (MCMB), hard carbon, soft carbon, silicon, a silicon--carbon composite, SiO, a Li-Sn alloy, a Li-Sn-O alloy, Sn, SnO, $SnO_2$, a spinel-structure $Li_4Ti_5O_{12}$, a Li-Al alloy, and the like.

In some embodiments of this application, the negative electrode active material layer further includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments of this application, the negative electrode active material layer further includes a conductive agent. The conductive agent may be selected from at least one of superconducting carbon, acetylene black, carbon black, Ketjen black, carbon dots, carbon nanotubes, graphene, and carbon nanofiber.

In some embodiments of this application, the negative electrode active material layer may further include other promoters such as a thickener (for example, sodium carboxymethyl cellulose (CMC-Na)).

However, this application is not limited to the above-described materials, and the negative electrode plate of this application may alternatively be made of other well-known materials that may be used as the negative electrode active material, the conductive agent, the binder, and the thickener.

The negative electrode plate of this application can be prepared according to conventional methods in the art. For example, the negative electrode active material, the conductive agent, the binder, and the thickener are dispersed in a solvent, where the solvent may be N-methyl pyrrolidone (NMP) or deionized water, to form a uniform negative electrode slurry. The negative electrode slurry is applied to the negative electrode current collector, and processes such as drying and cold pressing are performed to produce the negative electrode active material layer and the negative electrode plate.

The separator is sandwiched between the positive electrode plate and the negative electrode plate to mainly prevent short circuits between the positive and negative electrodes and allow active ions to pass through. The separator is not limited to any particular type in this application and may be any well-known porous separator with good chemical stability and mechanical stability.

In some embodiments of this application, a material of the separator may be selected from, but is not limited to, one or more of glass fiber, non-woven fabric, polyethylene, polypropylene, and polyvinylidene fluoride. Optionally, the material of the separator may include polyethylene and/or polypropylene. The separator may be a single-layer thin film or a multi-layer composite thin film. When the separator is a multi-layer composite thin film, each layer is made of the same or different materials. In other embodiments of this application, the separator may also be provided with a ceramic coating or a metal oxide coating.

In the electrochemical apparatus, the electrolyte is a carrier for ion transfer, which can play a role of conducting ions between the positive electrode plate and the negative electrode plate, and guarantees that the electrochemical apparatus obtains advantages such as good cycling performance.

In some embodiments of this application, the electrolyte includes an organic solvent, a lithium salt, and optional additives. Types of the organic solvent, the lithium salt, and the additives are not specifically limited and can be selected as required.

In some embodiments of this application, the lithium salt includes, but is not limited to, at least one of lithium hexafluorophosphate ($LiPF_6$), lithium tetrafluoroborate ($LiBF_4$), lithium perchlorate ($LiClO_4$), lithium bis(fluorosulphonyl) amide (LiFSI), lithium bitrifluoromethanesulphonyl amide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro-o(dioxalato)phosphate (LiDFOP), or lithium tetrafluoro oxalato phosphate (LiTFOP). One of the foregoing lithium salts may be used alone, or two or more of them may be used.

In some embodiments of this application, the organic solvent includes, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE). The foregoing organic solvents may be used alone, or two or more of them may be used together.

In some embodiments of this application, the additive may include a negative electrode film-forming additive or a positive electrode film-forming additive or may include an additive capable of improving some performance of the battery, for example, an additive for improving overcharge performance of the battery, or an additive for improving high-temperature performance or low-temperature performance of the battery.

In some examples, the additives include, but are not limited to, at least one of fluoroethylene carbonate (FEC), vinyl carbonate (VC), vinyl ethylene carbonate (VEC), vinyl sulfate (DTD), propylene sulfate, ethylene sulfite (ES), 1,3-propanesulfonate lactone (PS), 1,3-propylene sulfonate lactone (PST), sulfonate cyclic quaternary ammonium salt, succinic anhydride, succinonitrile (SN), adiponitrile (AND), tris (trimethylsilane) phosphate (TMSP), or tris (trimethylsilane) borate (TMSB).

The electrolyte may be prepared using a conventional method in the art. For example, the organic solvent, the lithium salt, and the optional additive may be mixed to produce a uniform electrolyte. A sequence of adding the materials is not particularly limited. For example, the lithium salt and the optional additive may be simultaneously added to the organic solvent to be mixed well to produce the electrolyte; alternatively, the lithium salt is added to the organic solvent, then the optional additive is added to the organic solvent, and the mixture is stirred to uniform to produce the electrolyte.

In some embodiments of this application, a positive electrode plate, a negative electrode plate, and a separator may be made into an electrode assembly through winding or lamination.

The electrochemical apparatus in some embodiments of this application further includes an outer package for encapsulating the electrode assembly and the electrolyte. In some embodiments of this application, the outer package may be a hard shell, for example, a hard plastic shell, an aluminum shell, or a steel shell; or a soft pack, for example, a soft pouch. A material of the soft pack may be plastic, for example, at least one of polypropylene (PP), polybutylene terephthalate (PBT), and polybutylene succinate (PBS).

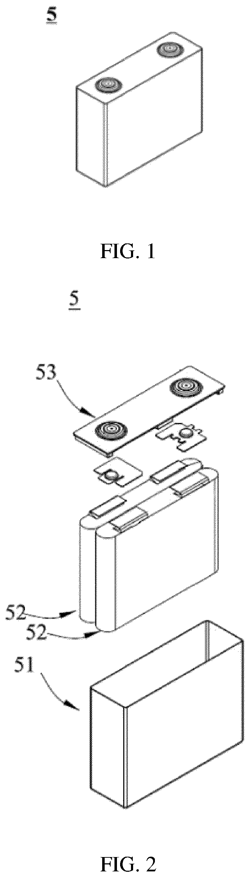

The embodiments of this application do not impose special limitations on the shape of the electrochemical apparatus, and the electrochemical apparatus may be cylindrical, rectangular, or of any other shape. FIG. 1 shows a rectangular electrochemical apparatus as an example.

In some embodiments of this application, referring to FIG. 2, the outer package may include a housing 51 and a cover assembly 53. The housing 51 includes a base plate and side plates connected to the base plate, and the base plate and the side plates enclose an accommodating cavity. The housing 51 has an opening communicating with the accommodating cavity, and the cover assembly 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte infiltrates into the electrode assembly 52. The electrochemical apparatus 5 may include one or more electrode assemblies 52, and persons skilled in the art may make choices according to actual requirements.

After the electrolyte infiltrates the electrode assembly, processes such as vacuum encapsulation, standing, formation, and vacuum molding are performed to produce the electrochemical apparatus.

**Electronic apparatus**

A second aspect of this application provides an electronic apparatus, including the electrochemical apparatus according to the first aspect of this application. The electrochemical apparatus provided in this application has good high-temperature cycling performance and high energy density, so that the electronic apparatus provided in this application has good high-temperature cycling performance.

The electronic apparatus in some embodiments of this application is not particularly limited and may be any known electronic apparatus used in the prior art. In some embodiments of this application, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on weight, all reagents used in the examples are commercially available or synthesized in a conventional manner, and can be used directly without further treatment, and all instruments used in the examples are commercially available.

The following embodiments describe in detail the electrochemical apparatus and the method for manufacturing the electrochemical apparatus using a lithium-ion secondary battery as an example for convenience.

**Example 1-1**

Preparation of positive electrode plate

Conductive carbon black and a binder were mixed in accordance with the mass ratio of 1:1.5 to get the conductive binder mixture, and then the conductive binder mixture was added to NMP,, followed by stirring for mixing, to make a conductive paste (with a solid content of 7%);

a positive electrode active substance lithium nickel cobalt manganese oxide (NCM) was added to the conductive paste, stirring continued using a vacuum mixer until the mixture was homogeneous, to produce a positive electrode slurry with a solid content of about 75%, where the mass ratio of NCM811, carbon nano tube, and the conductive binder is 97:1:2; and

the positive electrode slurry was applied onto an aluminum foil with a thickness of 10 $\mu$m, followed by drying, cold pressing, cutting, and tab welding, to produce a positive electrode plate.

Preparation of negative electrode plate

Artificial graphite, styrene-butadiene rubber, and sodium carboxymethyl cellulose were mixed at a mass ratio of 96:2:2 with deionized water and additives, the mixture was stirred to uniform to produce a negative electrode slurry; and the negative electrode slurry was applied onto a copper foil with a thickness of 12 $\mu$m, followed by drying, cold pressing, cutting, and tab welding, to produce a negative electrode plate.

Preparation of electrolyte

Under a dry argon environment, EC, PC, and DEC (based on a weight ratio of 1:1:1) were mixed, and $LiPF_6$ was added. The mixture was made even to obtain a base electrolyte, where the concentration of $LiPF_6$ was 1.15 mol/L.

Preparation of separator

A polyethylene (PE) porous polymer film was used as a separator.

Preparation of lithium-ion secondary battery

The positive electrode plate, the separator, and the negative electrode plate were sequentially stacked to form an electrode assembly. Then, the electrode assembly was placed into an outer package, and the electrolyte was then injected into the outer package to infiltrate the electrode assembly, followed by processes such as packaging, standing, and formation to produce a lithium-ion secondary battery.

**Example 1-2 to Example 1-6**

The preparation method was similar to the preparation method of Example 1-1, except that some parameters of the positive electrode plate were different. Refer to Table 1 for details.

**Comparative example 1-1 to Comparative example 1-4**

The preparation method was similar to the preparation method of Example 1-1, except that some parameters of the positive electrode plate were different. Refer to Table 1 for details.

**Example 2-1 to Example 2-7**

The preparation method was similar to the preparation method of Example 1-1, except that some parameters of the positive electrode plate were different. Refer to Table 2 for details.

**Example 3-1 to Example 3-9**

The preparation method was similar to the preparation method of Example 1-1, except that some parameters of the positive electrode plate were different. Refer to Table 3 for details.

**Example 4-1 to Example 4-8**

The preparation method was similar to the preparation method of Example 1-1, except that some parameters of the positive electrode plate were different. Refer to Table 4 for details.

**Example 5-1 to Example 5-5**

The preparation method was similar to the preparation method of Example 1-1, except that some parameters of the positive electrode plate were different. Refer to Table 5 for details.

Testing

1. Testing for surface density of positive electrode active material layer

Ten small circular samples were punched from the positive electrode plate coated with the positive electrode active material layer. Each sample has a surface area of 1540.25 $mm^2$. The punched positive electrode plate samples were weighed to obtain the average mass m1. Then, ten small circular samples were punched in the same way from the positive electrode current collector and weighed using a balance to obtain the average mass m2. The surface density is calculated as (m1 - m2)/1540.25 $mm^2$.

2. Testing for compacted density of positive electrode active material layer

The discharged lithium-ion secondary battery under test was disassembled to take out the positive electrode plate, and the positive electrode plate was immersed in DMO (dimethyl oxalate) for 30 min to remove the electrolyte and by-products on the surface of the positive electrode plate, and then it was dried in a fume hood for 4 h. The dried positive electrode plate was taken out and measured using a micrometer to obtain the thickness $H_1$ of the positive electrode active material layer of the positive electrode plate. Then, a unit area of the positive electrode active material layer was scraped off from the positive electrode plate using a scraper and measured using a balance to obtain the mass m3 of the positive electrode active material layer per unit area of the positive electrode plate. The compacted density of the positive electrode active material layer is calculated as $m3/H_1$.

3. Testing for $D_v50$, $D_v10$, and $D_v99$ of positive electrode active material

    (1) Equipment startup: Firstly, the sample introduction system of the laser diffraction/scattering particle size analyzer (Master Sizer 3000) was turned on, and then the optical system and computer were turned on to preheat the equipment for 30 minutes.
    (2) Cleaning of the sample introduction system: The sample introduction vessel was added with water, and the rotation speed was adjusted to the maximum to clean the vessel for 5 seconds. Then, the rotation speed was adjusted to 0. Cleaning of the sample introduction vessel was repeatedly 3 times to ensure the cleanliness of the sample introduction vessel.
    (3) After a "Manual Measurement" interface was displayed, the material name, refractive index, material type, test time, and test repetitions were set in sequence;
    (4) Light and background light were measured by clicking "start" at the electrode;
    (5) The positive electrode active material was dispersed in aqueous solution (10 mL) to make a sample, the sample was added to the feeder, where the opacity increased with the amount of the sample added. When the opacity reached 8% to 12%, no more samples were added. After the opacity became stable (generally after 30 seconds), "start" was tapped to measure the particle size. After the test was completed, $D_v50$, $D_v10$, and $D_v99$ were obtained.
    (6) Three parallel samples were tested to calculate the averages of $D_v50$, $D_v10$, and $D_v99$.

4. Measurement of thickness $H_2$ of positive electrode current collector

The thickness $H_2$ of the positive electrode current collector was measured using a micrometer.

5. Measurement of weight-average molecular weight Mw and number-average molecular weight Mn of binder

GB/T 21863-2008 Gel Permeation Chromatography was referred to for measurement of molecular weight and molecular weight distribution, with the ultrahigh performance polymer chromatograph ACQUITY APC and the detector ACQUITY Differential Refractive Detector used. The test steps were as follows:

(1) Power on and preheating: The chromatographic column and pipeline were installed, the control console, power supply, and the like were turned on, and the testing software Empower was opened.
(2) Parameter setting: sample volume: 0 $\mu$L to 50 $\mu$L (depending on the concentration of the sample); pump flow rate: 0.2 mL/min; mobile phase: 30 mol/L for NMP solution containing LiBr; sealing cleaning solution: isopropanol; guard column: PL gel 10 $\mu$m MiniMIX B Guard (size: 50 mm $\times$ 4.6 mm $\times$ 2); analytical column: PL gel 10 $\mu$m MiniMIX B (size: 250 mm $\times$ 4.6 mm); standard sample: polystyrene kit; run time: 30 minutes; detector: ACQUITY Differential Refractive Index (RI) Detector; column oven temperature: 90°C; and detector temperature: 55°C.
(3) Sample testing: a. Standard and test samples were prepared: 0.002 g to 0.004 g of standard/test samples were weighed and added to 2 mL of mobile phase liquid to prepare a 0.1% to 0.5% mixed standard/test solution. The solution was put into a refrigerator for more than 8 hours. b. Standard solution/samples were tested: The sample group under test was edited, the established sample group method was selected, and after the baseline became stabilized, a run queue was tapped to start testing the samples.
(4) Data processing: A calibration curve was established using the chemical workstation software according to the relationship between retention time and molecular weight. Integration quantification was performed on the sample chromatograms, and the chemical workstation software automatically generated the molecular weight and molecular weight distribution results.

6. Testing for diameter $D_0$ of agglomeration region and number density per unit area

(1) A sample with a width of 5 cm and a length of 5 cm was cut from a dried positive electrode plate using a blade and fixed on a microscope test bench;
(2) The microscope test device was turned on, the test magnification was adjusted to X100, and adjustment was performed until the interface was clear;
(3) Measurement was performed: an observation range of 1.0 cm x 1.0 cm was selected as the observation area, white agglomeration regions in the observation area were counted, and the maximum diameter of the agglomeration regions was recorded as $D_0$.

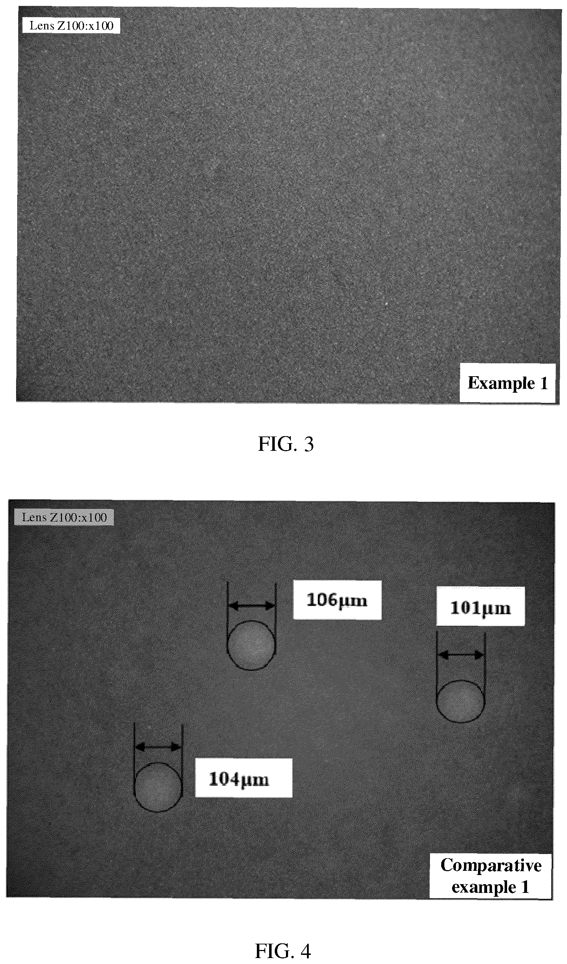

FIGs. 3 and 4 show SEM images of the positive electrode plate in Example 1 and Comparative example 1, respectively.

7. Testing for resistance of positive electrode plate

The test was performed using a resistance meter. Details were as follows: the power supply of the equipment was maintained at 220 V, and the atmospheric pressure was greater than 0.7 MPa; the positive electrode plate was removed from the fully discharged battery, and the cut positive electrode plate (60 mm x 80 mm) was flatly placed on a sample holder; and then the sample holder was placed in the testing chamber of the device to start the testing, where the atmospheric pressure was set to "0" throughout the entire testing process.

8. Testing for capacity retention rate

At a test ambient temperature of 45°C, the lithium-ion battery after formation was charged to the cut-off voltage of 4.5 V at a current of 1.3C in the constant current charging stage, charged at a constant voltage to the cut-off current of 0.05C, and then the charging stopped. After fully charged, the battery was left standing for 5min, and then discharged to 3.0 V at a current of 1.0C. This was one charging and discharging cycle. The battery was charged and discharged for 500 such charging and discharging cycles. The discharge capacity after 500 cycles divided by the discharge capacity in the first cycle was the cycling capacity retention rate.

9. Testing for thickness expansion rate of lithium-ion secondary battery

The thickness of the lithium-ion secondary battery is tested using a PPG plate thickness gauge, where the thickness expansion rate of the lithium-ion secondary battery = (full-charge thickness after cycling - thickness after initial full charge)/thickness after initial full charge $\times$ 100%.

Table 1 lists the relevant parameters ($D_v99/H_1$, $D_0$, and number density) of the positive electrode active material layer and their test results in Examples 1-1 to 1-4 and Comparative examples 1-1 and 1-2.

**Table 1**

| No. | Positive electrode active material layer | | | | | Resistance (m$\Omega$) | Capacity retention rate (after 500 cycles at 45°C) | Expansion rate (after 500 cycles at 45°C) |
|---|---|---|---|---|---|---|---|---|
| | $D_v99$ ($\mu$m) | $H_1$ ($\mu$m) | $D_v99/H_1$ | $D_0$ ($\mu$m) | Number density (pcs/cm$^2$) | | | |
| Example 1-1 | 15.6 | 27.1 | 0.58 | 11.5 | 3 | 189 | 79.20% | 7.80% |
| Example 1-2 | 15.6 | 24.2 | 0.89 | 18.9 | 4 | 256 | 69.40% | 11.80% |
| Example 1-3 | 12.4 | 14.4 | 0.86 | 17.9 | 4 | 295 | 78.40% | 8.10% |
| Example 1-4 | 23.2 | 32.5 | 0.71 | 10.9 | 3 | 184 | 79.30% | 6.80% |
| Example 1-5 | 17.7 | 27.1 | 0.65 | 16.1 | 5 | 203 | 73.70% | 8.80% |
| Example 1-6 | 21.3 | 28.4 | 0.75 | 23.1 | 3 | 193 | 75.4% | 7.91% |
| Comparative example 1-1 | 13.7 | 26.4 | 0.52 | 22.3 | 6 | 355 | 68.2% | 12.8% |
| Comparative example 1-2 | 10 | 27.1 | 0.37 | 16.8 | 10 | 433 | 64.20% | 16.80% |
| Comparative example 1-3 | 28.4 | 28.6 | 0.99 | 24 | 12 | 387 | 64.30% | 13.5% |
| Comparative example 1-4 | 30.5 | 32.1 | 0.95 | 25.2 | 3 | 347 | 65.7% | 13.01% |

According to Table 1, a comparison of the test results between Examples 1-1 to 1-6 and Comparative examples 1-1 to 1-4 shows that in the electrochemical apparatus provided in the embodiments of this application, the ratio of $D_v99$ of the positive electrode active material to the thickness $H_1$ of the positive electrode active material layer on a single side satisfies $0.5 \leq D_v99/H_1 \leq 0.9$, and number density of agglomeration regions with a bright spot having a diameter $D_0$ greater than or equal to 20 $\mu$m on the surface of the positive electrode active material layer observed under a scanning electron microscope is less than or equal to 5 pcs/cm$^2$ in a unit area on the surface of the positive electrode active material layer. This can help to make the electrochemical apparatus take into account the multiplication ratio performance and the high-temperature cycling performance.

Table 2 lists the relevant parameters ($D_v50$, $D_v10$, and $D_v50/D_v10$) of the positive electrode active material layer and their test results in Examples 2-1 to 2-7.

**Table 2**

| No. | Positive electrode active material layer | | | Resistance (m$\Omega$) | Capacity retention rate (after 500 cycles at 45°C) | Expansion rate (after 500 cycles at 45°C) |
|---|---|---|---|---|---|---|
| | $D_v50$ ($\mu$m) | $D_v10$ ($\mu$m) | $D_v50/D_v10$ | | | |
| Example 2-1 | 9.6 | 6.4 | 1.5 | 189 | 79.20% | 7.80% |
| Example 2-2 | 15.6 | 10.4 | 1.5 | 206 | 77.40% | 8.10% |
| Example 2-3 | 9.6 | 4.8 | 2.0 | 181 | 74.20% | 8.50% |
| Example 2-4 | 9.6 | 3.8 | 2.5 | 267 | 73.10% | 10.40% |
| Example 2-5 | 9.6 | 8.0 | 1.2 | 208 | 76.50% | 8.30% |

(continued)

| No. | Positive electrode active material layer | | | Resistance (mΩ) | Capacity retention rate (after 500 cycles at 45°C) | Expansion rate (after 500 cycles at 45°C) |
|---|---|---|---|---|---|---|
| | $D_v50$ (μm) | $D_v10$ (μm) | $D_v50/D_v10$ | | | |
| Example 2-6 | 9.6 | 3.2 | 3.0 | 298 | 68.3% | 12.6% |
| Example 2-7 | 9.6 | 9.6 | 1.0 | 232 | 72.20% | 8.50% |

According to Table 2, a comparison of test results between Examples 2-1 to 2-5 and 2-7 and Example 2-6 shows that particle size distribution of the positive electrode active material satisfying $1.0 \leq D_v50/D_v10 \leq 2.5$ can reduce the crushing of the positive electrode active material and thus reduce the resistance of the positive electrode plate as well as the expansion rate of the electrochemical apparatus, thereby further improving the high-temperature cycling performance of the electrochemical apparatus.

Table 3 lists the relevant parameters ($D_v99$ and $H_1$) of the positive electrode active material layer, the relevant parameters ($H_2$, $H_2/D_v99$, and $H_1/H_2$) of the positive electrode current collector in the Examples 3-1 and 3-9, and their test results.

**Table 3**

| No. | Positive electrode active material layer | | Positive electrode current collector | | | Resistance (mΩ) | Capacity retention rate (after 500 cycles at 45°C) | Expansion rate (after 500 cycles at 45°C) |
|---|---|---|---|---|---|---|---|---|
| | $D_v99$ (μm) | $H_1$ (μm) | $H_2$ (μm) | $H_2/D_v99$ | $H_1/H_2$ | | | |
| Example 3-1 | 12.4 | 14.4 | 10 | 0.81 | 1.44 | 295 | 78.40% | 6.10% |
| Example 3-2 | 15.6 | 27.1 | 10 | 0.64 | 2.71 | 189 | 79.20% | 7.80% |
| Example 3-3 | 23.2 | 27.1 | 10 | 0.43 | 2.71 | 256 | 75.40% | 9.80% |
| Example 3-4 | 23.2 | 32.5 | 10 | 0.43 | 3.25 | 189 | 79.30% | 5.80% |
| Example 3-5 | 10.0 | 27.1 | 10 | 1.0 | 2.71 | 403 | 66.90% | 12.50% |
| Example 3-6 | 15.6 | 27.1 | 15 | 0.96 | 1.81 | 310 | 68.00% | 9.50% |
| Example 3-7 | 15.6 | 27.1 | 9 | 0.58 | 0.33 | 210 | 71.00% | 9.80% |
| Example 3-8 | 8.0 | 27.1 | 10 | 1.25 | 2.71 | 433 | 64.20% | 16.80% |
| Examples 3 to 9 | 23.2 | 32.5 | 8 | 0.34 | 4.06 | 410 | 65.60% | 15.30% |

According to Table 3, a comparison of test results between Examples 3-2, 3-3, 3-5, and 3-8 shows that the particle size distribution of the positive electrode active material $D_v99$ and $H_2/D_v99$ being within the appropriate range can help to reduce the electrical resistance of the positive electrode plate as well as the expansion rate of the electrochemical apparatus, thereby increasing the high-temperature cycling performance of the electrochemical apparatus.

A comparison of test results between Examples 3-3 and 3-4 shows that the thickness H1 of the positive electrode active material layer and $H_1/H_2$ being within the appropriate range can contribute to lowering the resistance of the positive electrode plate and the expansion rate of the electrochemical apparatus, thereby improving the high-temperature cycling performance of the electrochemical apparatus.

A comparison of test results between Examples 3-2, 3-6, and 3-7 shows that the thickness H2 of the positive electrode current collector and $H_1/H_2$ being within the appropriate range can contribute to lowering the resistance of the positive electrode plate and the expansion rate of the electrochemical apparatus, thereby improving the high-temperature cycling performance of the electrochemical apparatus.

Table 4 lists the test results of the positive electrode active materials in Examples 4-1 to 4-8 at different surface densities and compacted densities.

**Table 4**

| No. | Positive electrode active material layer | | Resistance $(m\Omega)$ | Capacity retention rate (after 500 cycles at 45°C) | Expansion rate (after 500 cycles at 45°C) |
|---|---|---|---|---|---|
| | Surface density | Compacted density | | | |
| Example 4-1 | 150 | 3.4 | 191 | 73.20% | 7.80% |
| Example 4-2 | 150 | 3.5 | 196 | 75.30% | 8.30% |
| Example 4-3 | 150 | 3.6 | 168 | 84.50% | 5.30% |
| Example 4-4 | 150 | 3.7 | 208 | 74.70% | 8.80% |
| Example 4-5 | 180 | 3.6 | 189 | 79.30% | 5.80% |
| Example 4-6 | 80 | 3.6 | 295 | 78.40% | 6.10% |
| Example 4-7 | 200 | 3.6 | 299 | 70.40% | 11.30% |
| Example 4-8 | 150 | 3.8 | 267 | 68.40% | 12.60% |
| Notes: The unit of the surface density is mg/1540.25 $mm^2$; and the unit of the compacted density is $g/cm^3$. | | | | | |

According to Table 4, a comparison of the test results between Examples 4-1 to 4-4 shows that the compacted density of the positive electrode active material layer being within the range of 3.3 $g/cm^3$ to 3.7 $g/cm^3$ can enable the positive electrode plate to have a lower electrical resistance as well as enable the electrochemical apparatus to have a lower expansion rate, thereby further improving the high-temperature cycling performance of electrochemical apparatus.

A comparison of the test results between Examples 4-5 to 4-7 shows that the surface density of the positive electrode active material layer being within the range of 80 mg/1540.25 $mm^2$ to 180 mg/1540.25 $mm^2$ can also enable the positive electrode plate to have a lower resistance and enable the electrochemical apparatus to have a lower expansion rate, thereby further improving the high-temperature cycling performance of the electrochemical apparatus.

**Table 5**

| No. | Binder | | | | | | | Capacity retention rate (after 500 cycles at 45°C) | Expansion rate (after 500 cycles at 45°C) |
|---|---|---|---|---|---|---|---|---|---|
| | Mw | Mw/Mn | VDF | TFE | HFP | COOH | PVP | | |
| Example 5-1 | 110w | 2.3 | √ | √ | √ | × | √ | 80.5% | 5.3% |
| Example 5-2 | 110w | 2.3 | √ | √ | √ | × | × | 79.3% | 5.5% |
| Example 5-3 | 110w | 2.3 | √ | √ | × | × | × | 60.5% | 15.3% |
| Example 5-4 | 110w | 2.3 | √ | × | √ | × | × | 61.5% | 14.2% |
| Example 5-5 | 105w | 2.1 | √ | × | × | √ | × | 63.5% | 14.3% |

According to Table 5, it can be learned that in the electrochemical apparatus provided in the embodiments of this application, the binder contained in the positive electrode active material layer can effectively inhibit the formation of gels, helping improve the high-temperature cycling performance of the electrochemical apparatus.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. An electrochemical apparatus comprising a positive electrode plate, wherein the positive electrode plate comprises a positive electrode current collector and a positive electrode active material layer disposed on one or two sides of the positive electrode current collector, and the positive electrode active material layer comprises a positive electrode active material; wherein

   a ratio of $D_v99$ of the positive electrode active material to thickness $H_1$ of the positive electrode active material layer on a single side satisfies $0.5 \leq D_v99/H_1 \leq 0.9$; and

   agglomeration regions with a bright spot having a diameter $D_0$ greater than or equal to 20 $\mu$m are observed on surface of the positive electrode active material layer under a scanning electron microscope, and the agglomeration regions have a number density less than or equal to 5 pcs/cm$^2$ per unit area on the surface of the positive electrode active material layer.

2. The electrochemical apparatus according to claim 1, wherein $D_v99$ of the positive electrode active material satisfies 15 $\mu$m $\leq D_v99 \leq 30$ $\mu$m, and thickness $H_1$ of the positive electrode active material layer on a single side satisfies 10 $\mu$m $\leq H_1 \leq 35$ $\mu$m.

3. The electrochemical apparatus according to claim 1 or 2, wherein a ratio of $D_v50$ of the positive electrode active material to $D_v10$ of the positive electrode active material satisfies $1.0 < D_v50/D_v10 \leq 2.5$.

4. The electrochemical apparatus according to any one of claims 1 to 3, wherein a ratio of $D_v50$ of the positive electrode active material to $D_v10$ of the positive electrode active material satisfies $1.0 < D_v50/D_v10 \leq 2.0$.

5. The electrochemical apparatus according to any one of claims 1 to 4, wherein the positive electrode active material comprises a nickel-cobalt-manganese ternary material.

6. The electrochemical apparatus according to claim 5, wherein a proportion of moles of nickel to total moles of nickel, cobalt, and manganese in the nickel-cobalt-manganese ternary material is greater than or equal to 60%.

7. The electrochemical apparatus according to any one of claims 1 to 6, wherein a thickness $H_2$ of the positive electrode current collector satisfies at least one of the following characteristics:

$$\text{(I) } 0.3 \leq H_2/D_v99 \leq 1;$$

$$\text{(II) } 1 \leq H_1/H_2 \leq 4;$$

   or

$$\text{(III) } 7 \text{ }\mu\text{m} \leq H_2 \leq 20 \text{ }\mu\text{m}.$$

8. The electrochemical apparatus according to any one of claims 1 to 7, wherein a thickness $H_2$ of the positive electrode current collector satisfies 8 $\mu$m $\leq H_2 \leq 12$ $\mu$m.

9. The electrochemical apparatus according to any one of claims 1 to 8, wherein the positive electrode active material layer has a surface density of 80 mg/1540.25 mm$^2$ to 180 mg/1540.25 mm$^2$.

10. The electrochemical apparatus according to any one of claims 1 to 9, wherein the positive electrode active material layer has a compacted density of 3.3 g/cm$^3$ to 3.7 g/cm$^3$.

11. The electrochemical apparatus according to any one of claims 1 to 10, wherein the positive electrode active material layer has a compacted density of 3.5 g/cm$^3$ to 3.65 g/cm$^3$.

12. The electrochemical apparatus according to any one of claims 1 to 11, wherein the positive electrode active material layer further comprises a binder, the binder has a corresponding Fourier transform infrared spectral characteristic peak in the range of 1655cm$^{-1}$ to 1705cm$^{-1}$.

**13.** The electrochemical apparatus according to claim 12, wherein the binder comprises a polyvinylidene fluoride copolymer.

**14.** The electrochemical apparatus according to claim 12 or 13, wherein the binder has a structural formula represented by formula (A):

$$(VDF)m(TFE)n(HFP)r(PVP)x \qquad (A)$$

wherein in formula (A), VDF is a structural unit of polyvinylidene fluoride, TFE is a structural unit of polytetrafluoroethylene, HFP is a structural unit of polyhexafluoropropylene, PVP is a structural unit of polyvinylpyrrolidone, $0.35 \leq m \leq 1$, $0 \leq n \leq 0.4$, $0 \leq r \leq 0.2$, $0 \leq x \leq 0.2$, and $m + n + r + x = 1$.

**15.** An electronic apparatus comprising the electrochemical apparatus according to any one of claims 1 to 14.

<u>5</u>

FIG. 1

<u>5</u>

53

52

52

51

FIG. 2

FIG. 3

FIG. 4

## INTERNATIONAL SEARCH REPORT

| | |
|---|---|
| International application No. | **PCT/CN2023/123525** |

| | | |
|---|---|---|
| **A.** | **CLASSIFICATION OF SUBJECT MATTER** | |

H01M4/131(2010.01)i; H01M4/505(2010.01)i; H01M4/525(2010.01)i; H01M4/62(2006.01)i; H01M10/0525(2010.01)i

According to International Patent Classification (IPC) or to both national classification and IPC

| | | |
|---|---|---|
| **B.** | **FIELDS SEARCHED** | |

Minimum documentation searched (classification system followed by classification symbols)

IPC: H01M4; H01M10

Documentation searched other than minimum documentation to the extent that such documents are included in the fields searched

Electronic data base consulted during the international search (name of data base and, where practicable, search terms used)

CNTXT, ENTXTC, WPABS, DWPI, CNKI, 读秀, DUXIU, Web of science: 氟乙烯, 个数, 共聚物, 厚度, 活性, 极片, 粒径, 亮点, 密度, 凝胶, 六氟丙烯, 偏氟乙烯, 偏二氟乙烯, 四氟乙烯, 凸点, 凸起, 突出, 团聚, 循环, 抑制, 阴极, 粘接剂, 粘结剂, 正极, 吡咯烷酮, anode?, cathode?, positive, thickness, particle size, diameter?, densit+, active, HFP, PVP, TFE, VDF, Dv50, Dv99, D50, D99

| | | |
|---|---|---|
| **C.** | **DOCUMENTS CONSIDERED TO BE RELEVANT** | |

| Category* | Citation of document, with indication, where appropriate, of the relevant passages | Relevant to claim No. |
|---|---|---|
| PX | CN 115472776 A (NINGDE AMPEREX TECHNOLOGY LIMITED) 13 December 2022 (2022-12-13)<br>claims 1-15 | 1-15 |
| Y | CN 114614106 A (NINGDE AMPEREX TECHNOLOGY LIMITED) 10 June 2022 (2022-06-10)<br>description, paragraphs [0004]-[0026], [0043], and [0063], and table 1 | 1-13, 15 |
| A | CN 114614106 A (NINGDE AMPEREX TECHNOLOGY LIMITED) 10 June 2022 (2022-06-10)<br>description, paragraphs [0004]-[0026], [0043], and [0063], and table 1 | 14 |
| Y | CN 102255075 A (CHENGDU JINGYUAN NEW MATERIALS TECHNOLOGY CO., LTD.) 23 November 2011 (2011-11-23)<br>description, paragraphs [0003]-[0021] | 1-13, 15 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search | Date of mailing of the international search report |
| **30 November 2023** | **11 December 2023** |
| Name and mailing address of the ISA/CN | Authorized officer |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/123525**

### C. DOCUMENTS CONSIDERED TO BE RELEVANT

| Category* | Citation of document, with indication, where appropriate, of the relevant passages | Relevant to claim No. |
|---|---|---|
| A | CN 102255075 A (CHENGDU JINGYUAN NEW MATERIALS TECHNOLOGY CO., LTD.) 23 November 2011 (2011-11-23)<br>description, paragraphs [0003]-[0021] | 14 |
| A | CN 101765934 A (NIPPON CHEMICAL INDUSTRIAL CO., LTD.) 30 June 2010 (2010-06-30)<br>entire document | 1-15 |
| A | CN 103326011 A (NANTONG RESHINE NEW MATERIAL CO., LTD.) 25 September 2013 (2013-09-25)<br>entire document | 1-15 |
| A | CN 113097474 A (NINGDE AMPEREX TECHNOLOGY LIMITED) 09 July 2021 (2021-07-09)<br>entire document | 1-15 |
| A | CN 114551789 A (NINGDE AMPEREX TECHNOLOGY LIMITED) 27 May 2022 (2022-05-27)<br>entire document | 1-15 |
| A | KR 20180122238 A (LG CHEM LTD.) 12 November 2018 (2018-11-12)<br>entire document | 1-15 |
| A | US 2020161650 A1 (LG CHEM LTD.) 21 May 2020 (2020-05-21)<br>entire document | 1-15 |

Form PCT/ISA/210 (second sheet) (July 2022)

## INTERNATIONAL SEARCH REPORT
### Information on patent family members

International application No.

**PCT/CN2023/123525**

| Patent document cited in search report | | | Publication date (day/month/year) | Patent family member(s) | | | Publication date (day/month/year) |
|---|---|---|---|---|---|---|---|
| CN | 115472776 | A | 13 December 2022 | None | | | |
| CN | 114614106 | A | 10 June 2022 | None | | | |
| CN | 102255075 | A | 23 November 2011 | None | | | |
| CN | 101765934 | A | 30 June 2010 | US | 2012175552 | A1 | 12 July 2012 |
| | | | | JP | 2009032467 | A | 12 February 2009 |
| | | | | JP | 5341325 | B2 | 13 November 2013 |
| | | | | US | 2011020704 | A1 | 27 January 2011 |
| | | | | KR | 20100049556 | A | 12 May 2010 |
| | | | | KR | 101478861 | B1 | 02 January 2015 |
| | | | | WO | 2009014158 | A1 | 29 January 2009 |
| | | | | EP | 2178138 | A1 | 21 April 2010 |
| | | | | EP | 2178138 | A4 | 21 December 2011 |
| | | | | EP | 2178138 | B1 | 17 April 2013 |
| CN | 103326011 | A | 25 September 2013 | None | | | |
| CN | 113097474 | A | 09 July 2021 | None | | | |
| CN | 114551789 | A | 27 May 2022 | None | | | |
| KR | 20180122238 | A | 12 November 2018 | KR | 102158680 | B1 | 22 September 2020 |
| | | | | US | 2018323423 | A1 | 08 November 2018 |
| | | | | US | 10720634 | B2 | 21 July 2020 |
| US | 2020161650 | A1 | 21 May 2020 | KR | 20190059249 | A | 30 May 2019 |
| | | | | JP | 2020515010 | A | 21 May 2020 |
| | | | | JP | 7076877 | B2 | 30 May 2022 |
| | | | | PL | 3595060 | T3 | 14 June 2021 |
| | | | | US | 11424447 | B2 | 23 August 2022 |
| | | | | EP | 3595060 | A1 | 15 January 2020 |
| | | | | EP | 3595060 | A4 | 29 April 2020 |
| | | | | EP | 3595060 | B1 | 24 February 2021 |

Form PCT/ISA/210 (patent family annex) (July 2022)

**EP 4 579 783 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211353337